# EUROPEAN PATENT SPECIFICATION

(11) **EP 1 950 398 B1**
(45) Date of publication and mention of the grant of the patent: **21.11.2012**
(21) Application number: 07023995.9
(22) Date of filing: 11.12.2007
(51) Int. Cl.: F02D 41/22, F02D 41/26, B60W 50/02

(54) **Electronic control apparatus**
Elektronische Steuerungsvorrichtung
Dispositif de commande électronique

(30) Priority: 24.01.2007 JP 2007014093
(43) Date of publication of application: 30.07.2008
(60) Divisional application: 10155813.8
(73) Proprietor: DENSO CORPORATION, Kariya-city, Aichi-pref. 448-8661 (JP)
(72) Inventor: Sago, Kenichi, Kariya-city Aichi-pref., 448-8661 (JP)
(74) Representative: Winter, Brandl, Fürniss, Hübner, Röss, Kaiser, Polte - Partnerschaft

(56) References cited:
- JP-A- 2002 014 702
- US-A1- 2002 029 766
- US-A1- 2003 093 189

## Description

### BACKGROUND OF THE INVENTION

### 1. Field of the Invention

The present invention relates to an electronic control apparatus, and especially to an electronic control apparatus including a timer circuit always supplied with electric power separately from a control section thereof which is supplied with electric power through a power switch.

### 2. Description of Related Art

Such electronic control apparatuses including such a timer circuit includes one mounted on a vehicle for engine control as disclosed in Japanese Patent Application Laid-open No. 2002-14702. This electronic control apparatus is configured such that a microcomputer as a control section thereof is supplied with electric power while an ignition switch (may be abbreviated as IGSW hereinafter) is on. During operation (while the IGSW is on), the microcomputer periodically reads time data from the timer circuit, and updates an IG off time stored in a standby RAM always supplied with electric power, the IG off time being indicative of a time at which the IGSW is turned off. Accordingly, when IGSW is turned off, and the microcomputer stops operation, it results that there is stored, in the standby RAM, the IG off time showing a time that is nearly the same as the time at which the standby RAM was turned off. The microcomputer reads the time data from the timer circuit also when the IGSW is turned on, and the microcomputer starts operation. And the microcomputer calculates a difference between this read time and the IG off time stored in the standby RAM as a time period during which electric power supply was stopped (or a time period during which a vehicle engine was stopped, this time period being also referred to as "soak time"). As explained above, in this electronic control apparatus, the time period during which power supply to the microcomputer was stopped is measured by use of the timer circuit.

Further, in the electronic control apparatus disclosed in this Patent document, the microcomputer performs a process to detect abnormality in the timer circuit. This process is such that the microcomputer reads the time data from the timer circuit when the microcomputer determines that a predetermined time period has elapsed since the microcomputer started up based on an internal timer. And if a difference between this time data and the time data read earlier from the timer circuit when the microcomputer started up is not in a range corresponding to the above predetermined time period, it is judged that there is abnormality in the timer circuit.

However, this electronic control apparatus has a problem in that if the IGSW is turned off before elapse of the predetermined time period after start-up of the microcomputer, it becomes impossible to perform the abnormality detecting operation on the timer circuit. This causes lowering of frequency of the abnormality detecting operation.

To cope with this, it might occur that the predetermined time period is set at a relatively short time, for example 10 seconds. However, in this case, the timer circuit can be validated only for lower bit portions of a counter constituting the timer circuit.

Document US 2003/0093189 A1 describes an in-vehicle electronic control apparatus in which, when a microcomputer stops operation, a timer IC starts the count-up operation. When the count value reaches a preset value, a signal from the timer IC becomes high and a power supply voltage is output from a power supply IC to activate the microcomputer. The microcomputer reads the count value from the timer IC when it starts the operation. If such a count value has exceeded the specified value, the microcomputer determines occurrence of a failure.

### SUMMARY OF THE INVENTION

The present invention provides an electronic control apparatus comprising:
an engine control section supplied with electric power through a power switch to operate; a timer circuit always supplied with electric power to operate irrespective of an on/off state of the power switch:
   a power supply holding section operating to hold electric power supply to the engine control section after turn on of the power switch until reception of a power off command from the engine control section even though the power switch is turned off;
wherein
the engine control section is configured to perform, upon detecting turn-off of the power switch, a first process in which there is detected a difference between a variation of a count value of the timer circuit for a first time period from a first time at which the power switch is turned on to start up the engine control section to a second time at which the power switch is turned off, and a variation of an internal timer of the engine control section from the first time to the second time, a second process in which it is determined whether or not the difference detected by the first process is within a specified range, and a third process in which the timer circuit is judged to be abnormal if the difference detected by the first process is determined to be out of the specified range by the second process.

According to the present invention, it is possible to provide an electronic control apparatus of the type having a timer circuit always supplied with electric power, that can detect normal/abnormal judgment on the timer circuit more reliably than previously.

Other advantages and features of the invention will become apparent from the following description including the drawings and claims.

### BRIEF DESCRIPTION OF THE DRAWINGS

In the accompanying drawings:
Fig. 1 is a block diagram of an ECU as an embodiment of the present invention;
Fig. 2 is a flowchart showing a start-up process which a microcomputer included in the ECU performs at the time of start-up.
Fig. 3 is a flowchart showing contents of a first judgment process to detect abnormality in a timer IC included in the ECU;
Fig. 4 is a flowchart showing contents of a second judgment process to detect abnormality in the timer IC included in the ECU;
Fig. 5 is a flowchart showing a comprehensive judgment process to perform a final normal/abnormal judgment on the timer IC;
Fig. 6 is a time chart showing an example of operations of the processes shown in Fig. 2 to Fig. 5; and
Fig. 7 is a time chart showing another example of operations of the processes shown in Fig. 2 to Fig. 5.

### PREFERRED EMBODIMENTS OF THE INVENTION

In the following descriptions, the term ECU (Electronic Control Unit) means an electronic control apparatus mounted on a vehicle for control of a vehicle engine.

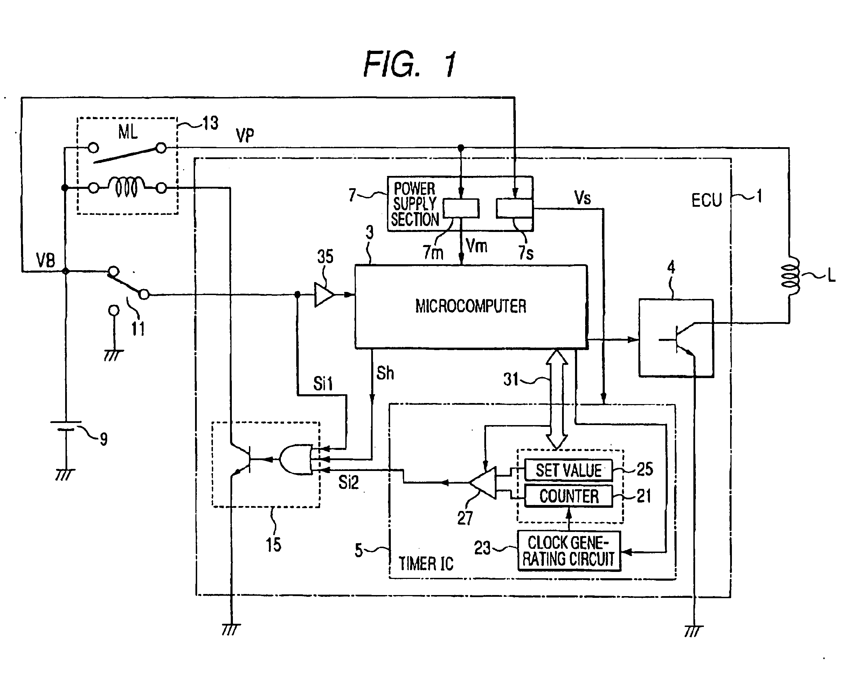

Fig. 1 is a block diagram of an ECU1 as an embodiment of the present invention. As shown in Fig. 1, the ECU1 includes a microcomputer 3 performing various processes for engine control, a load drive circuit 4 driving electric loads L related to engine control such as a fuel injector, and a fuel pump in accordance with control signals outputted from the microcomputer 3, a timer IC (soak timer unit) 5 having a function of measuring a time period during which the microcomputer 3 is in a stopped state, and a function of automatically starting the microcomputer, a power supply section 7 including a main power supply circuit 7m outputting a main power supply voltage Vm for powering the microcomputer 3, and a sub-power supply circuit 7s outputting a sub-power supply voltage Vs for powering the timer IC 5.

The sub-power supply circuit 7s of the power supply section 7 is always supplied with a voltage at a positive terminal of a vehicle battery 9 (referred to as "battery voltage VB" hereinafter). The sub-power supply circuit 7s always generates the sub-power supply voltage Vs from the battery voltage VB.

The main power supply circuit 7m of the power supply section 7 is supplied with the battery voltage VB through a power-supplying main relay 13 while an IGSW (ignition switch) 11 of a vehicle is on, or while a power supply activating signal Si2 outputted from the timer IC 5 is at high level, or when a power supply holding signal Sh outputted from the microcomputer 3 is at high level. In the following descriptions, the battery voltage of the battery 9 supplied through the main relay 13 is referred to as "battery voltage VP". The main power supply circuit 7m generates the main power supply voltage Vm from the battery voltage VP supplied through the main relay 13.

More detailed explanation is given in the following. The ECU1 is inputted with an IGSW signal Si1 indicative of whether the IGSW 11 is on or off from this IGSW 11. The IGSW signal Si1 becomes high level when the IGSW 11 is turned on, and becomes low level when the IGSW 11 is turned off.

The ECU 1 is provided with, as a power supply holding section, a main relay drive circuit 15 that operates to pass a current to a coil of the main relay 13 to short-circuit the contacts of the main relay 13 to thereby turn on the main relay 13, when at least one of the IGSW signal Si1, power supply activating signal Si2 outputted from the timer IC 5, and power supply holding signal Sh outputted from the microcomputer 3 is at high level. The main relay drive circuit 15 operates on the sub-power supply voltage Vs as well as the timer IC 5.

Accordingly, when at least one of the IGSW signal Si1, power supply activating signal Si2, and power supply holding signal Sh is at high level, the main relay 13 is turned on, as a consequence of which, the main power supply circuit 7m is supplied with the battery voltage VP, and the microcomputer 3 is supplied with the main power supply voltage Vm from the main power supply circuit 7m. The battery voltage VP from the main relay 13 is also supplied to the electric loads L.

The power supply section 7 also has a power-on-reset function of supplying the microcomputer 3 with a reset signal for a short time which is assumed to be necessary for the main power supply voltage Vm to become stable after the main power supply circuit 7m starts outputting the main power supply voltage Vm. Accordingly, the microcomputer 3 starts operation (starts up) from its initial state when the main power supply circuit 7m starts outputting the main power supply voltage Vm.

The timer IC 5 includes a counter 21 for measuring time, a clock generating circuit 23 generating a clock for the counter 21 (a clock for counting operation of the timer IC 5), a register 25 storing a set value with which a count value of the counter 21 (may be referred to simply as count value hereinafter) is compared, and a comparator circuit 27 comparing the count value with the set value stored in the register 25, and keeps the power supply activating signal Si2 at high level when the count value coincides with the set value.

Furthermore, the timer IC 5 has the following functions (A)-(E).
(A) Upon receiving a timer start command from the microcomputer 3 through a communication line 31, the timer IC 5 resets the count value to 0, and causes the counter 21 to start (reset-start).
(B) Any given set value is written into the register 25 from the microcomputer 3 through the communication line 31.
(C)The comparator circuit 27 resets the power supply activating signal Si2 to low level upon receiving an output reset command from the microcomputer 3 through the communication line 31.
(D)The count value can be read from the microcomputer 3 through the communication line 31.
(E) The frequency of the clock which the clock generating circuit 23 generates can be changed in accordance with a command from the microcomputer 3.

The microcomputer 3 is configured to take in the IGSW signal Si1 through a buffer circuit 35. Although omitted from the drawing, the microcomputer 3 is configured to take in signals to detect a vehicle driving state, such as a pulse signal outputted from a crank sensor, a signal outputted from a water temperature sensor, a signal from a vehicle speed sensor, etc. Also, although omitted from the drawing, in the ECU1, the battery voltage VB or VP is divided by registers, and the divided voltage is inputted into an input port for A/D converting function provided in the microcomputer 3. The microcomputer 3 A/D-converts the voltage inputted into the input port to detect the battery voltage.

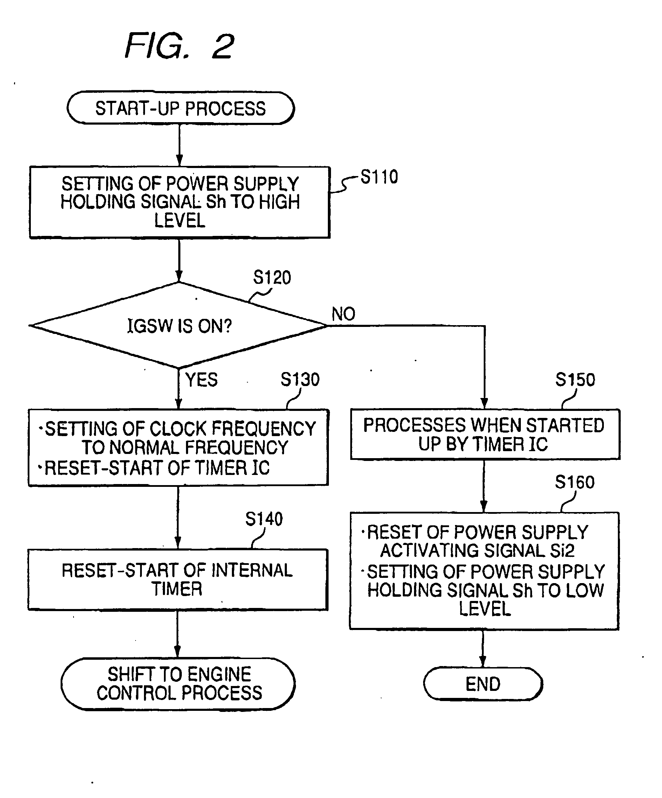

Next, explanation is made as to processes performed by the microcomputer 3. Fig. 2 is a flowchart showing a start-up process which the microcomputer 3 performs at the time of start-up. As shown in Fig. 2, when the microcomputer 3 starts being supplied with the main power supply voltage Vm from the main power supply circuit 7m, the microcomputer 3 sets the power supply holding signal Sh applied to the main relay drive circuit 15 to high level at step S110. This is to ensure a state in which the ECU1 is supplied with electric power irrespective of whether the IGSS 11 is on or off, and the main power supply voltage Vm is outputted from the main power supply circuit 7m (that is, a state in which the microcomputer 3 and the ECU1 can operate). Incidentally, start-up of the microcomputer 3 means start-up of the ECU1, and the battery voltage VP supplied through the main relay 13 is an operating voltage of the ECU1.

At subsequent step S120, in order to distinguish whether this time start-up is caused by turn-on of the IGSW11, or by an action of the timer IC 5, the level of the IGSW signal Si1 inputted from the buffer circuit 35 is read to determine whether the IGSW 11 is on or not.

If it is determined that the IGSW 11 is on at step S120, it is determined that this time start-up is due to turn-on of the IGSW 11, and the start-up process proceeds to step S130. At step S130, the frequency of the clock which the clock generating circuit 23 generates is set to a normal frequency for a normal time measuring operation, and a timer start command is sent to the timer IC 5 to cause the timer IC (counter 21, to be exact) to make a reset-start.

Next, at step S140, an internal timer of the microcomputer 3 is caused to make a reset-start. The internal timer of the microcomputer 3 is implemented by a regular routine executed at regular time intervals to increment a count value by one. Therefore, if the count value is reset to 0, it means that the internal timer is reset-started. Accordingly, at step S140, a process to reset the count value of the internal timer to 0 is performed.

After completion of step S140, an engine control process is started. On the other hand, if it is determined at step s120 that the IGSW 11 is not on, it is determined that this time start-up is due to an action of the IC timer 5 (due to a change to high level of the power supply activating signal Si2 outputted from the timer IC 5), and the start-up process proceeds to step S150.

At step S150, processes to be performed in a case where start-up is caused by the action of the IC timer 5 are performed. Such processes include a diagnostic process for an evapo-purge system, for example. This diagnostic process is such that a system for collecting an evapogas (evaporated fuel gas in a fuel tank) is opened or closed by an actuator in order to pressurize or depressurize this system, and a pressure variation in this system is measured to check for leaks in this system. The results of the diagnostic process are stored in a rewritable nonvolatile memory (not shown) provided inside or outside of the microcomputer 3. The results stored in the nonvolatile memory can be read from an external diagnostic device, so that, when an abnormality is present, it is indicated on a display of the vehicle.

At subsequent step s160, an output reset command is sent to the timer IC 5 in order to reset the power supply activating signal Si2 to low level, and to set the power supply holding signal Sh back to low level. At this time, since also the IGSW signal Si1 is at low level, the main relay 13 is turned off, as a consequence of which power supply from the main power supply circuit 7m to the microcomputer 3 is stopped. As a result, the microcomputer 3 and the ECU 1 stop operation. After that, if the IGSW 11 is turned on, the ECU1 starts up again.

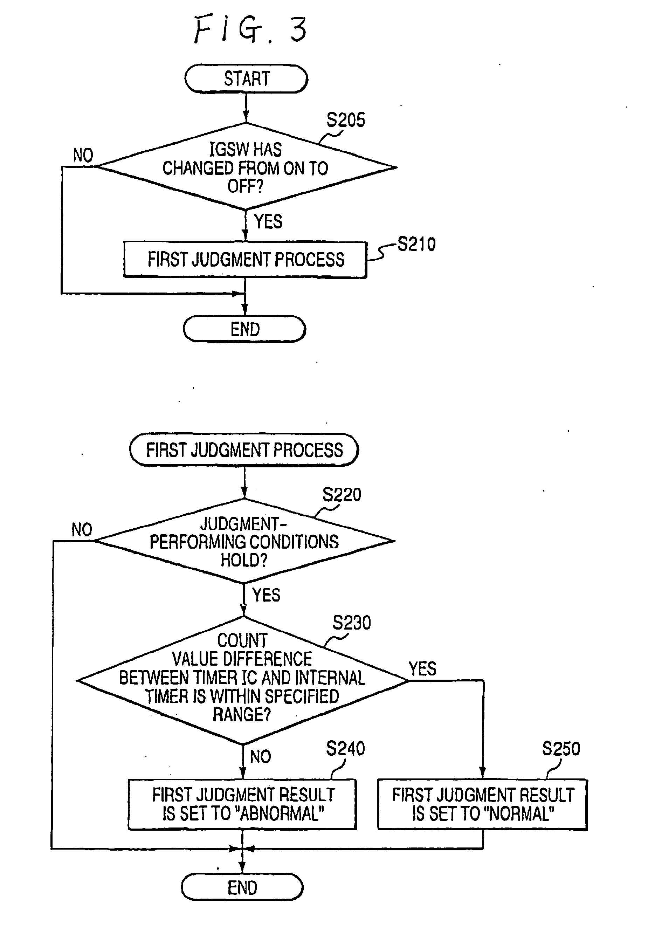

Fig. 3 is a flowchart showing contents of a first judgment process for detecting abnormality in the timer IC 5. As shown in (A) of Fig. 3, the microcomputer 3 periodically performs a process to determine whether the IGSW 11 is changed from off to on in conjunction with the engine control process at step S205. If the result of the determination is affirmative (step S205: YES), the first judgment process is performed.

As shown in (B) of Fig. 3, when the first judgment process is started, it is determined whether or not judgment-performing conditions to perform the abnormality judgment on the IC 5 hold. In this embodiment, the judgment-performing conditions are such that the battery voltage has not fallen below a specified voltage, and the engine rotation speed has not risen above a specified speed during a period after turn-on of the IGSW 11 to start the microcomputer 3 until the IGSW 11 is turned off. The engine rotation speed can be detected on the basis of the pulse signal outputted from the crank sensor.

At this step S220, if it is determined that the judgment-performing conditions do not hold (in case the battery voltage has fallen below the specified voltage, or the engine rotation speed has risen the specified speed), this first judgment process is terminated, and otherwise, this process proceeds to step S230.

At step S230, the current count value of the timer IC 5 (to be exact, the current count value of the counter 21), and the current count value of the internal timer are read, and it is determined whether or not a difference between these two count values is within a specified range.

If the difference is out of the specified range (S230: NO), the process proceeds to step S240 where a first judgment result as a result of this first judgment process is set "abnormal", and then the first judgment process is terminated.

If the difference is within the specified range (S230: YES), the process proceeds to step S250 where the first judgment result is set "normal", and then the first judgment process is terminated.

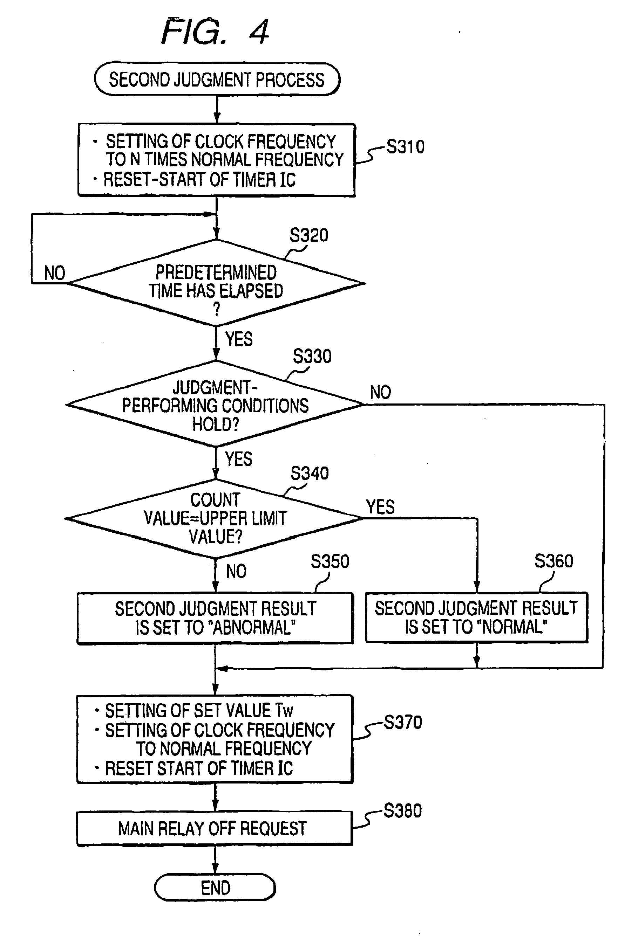

Fig. 4 is a flowchart showing contents of a second judgment process for detecting abnormality in the timer IC 5. This second judgment process is performed after completion of the first judgment process.

As shown in Fig. 4, when the second judgment process is started, the microcomputer 3 sets, at step S310, the frequency of the clock which the clock generating circuit 23 generates to a frequency N (N being a positive integer) times higher than the normal frequency , and causes the timer IC 5 (to be exact, the counter 21) to make a reset-start.

Subsequently, at step S320, it is determined whether or not the predetermined time period Ta has elapsed since the reset-start of'the timer IC 5 at step S310 on the basis of the count value of the internal timer. The predetermined time period Ta is set to a time slightly longer than a theoretical time necessary for the count value of the timer IC 5 to reach its upper limit value after completion of step S310. It may be set to 48 seconds, for example. The upper limit value is a maximum countable value of the counter 21 of the timer IC 5.

If it is determined at step S320 that the predetermined time period Ta has elapsed, the process proceeds to step S330 to determine whether or not judgment-performing conditions to perform the abnormality judgment on the IC 5 hold. The judgment-performing conditions here are such that the battery voltage has not fallen below the specified voltage within a period after completion of step S310 until it is determined at step S320 that the predetermined time period Ta has elapsed.

At step S330, if it is determined that the judgment-performing conditions do not hold (in case the battery voltage has fallen below the specified voltage), this second judgment process proceeds to step S370, and otherwise, proceeds to step S340.

At step S340, the count value of the timer IC 5 is read, and it is determined whether or not this count value has reached the upper limit value. If the count value of the timer IC 5 has not reached the upper limit value (S340: NO), the process proceeds to step S350 to set a second judgment result as a result of the second judgment process to "abnormal", and then proceeds to S370.

If the count value of the timer IC 5 has reached the upper limit value (S340: YES), the process proceeds to step S360 to set the second judgment result to "normal", and then proceeds to S370. At step S370, a set value corresponding to a wait time Tw to be elapsed before the next start-up of the microcomputer 3 is set in the register 25 of the timer IC 5, the frequency of the clock which the clock generating circuit 23 generates to the normal frequency for the normal time measuring operation, and the timer IC 5 (to be exact, the counter 21) is caused to make a reset-start.

At subsequent step S380, a main-relay-off request is issued to a wait judgment process, and then this second judgment process is terminated. The wait judgment process is a process for determining whether it is permissible for the microcomputer 3 to stop operation. This wait judgment process determines that there comes a state in which the microcomputer 3 may go into wait state, when the main-relay-off request has been issued at step S380, and other wait conditions such as completion of storing of learned values all hold. And at this time, a process for resetting the power supply activating signal Si2 to low level, and a process for setting the power supply holding signal Sh back to low level are performed. After that, this second judgment process enters an infinite loop in which no substantial process is performed.

At this time, since IGSW signal Si1 is also at low level, the main relay 13 is turned off, as a consequence of which the electric power supply to the microcomputer 3 is stopped, and the ECU1 stops operation. If the wait time Tw elapses while the IGSW 11 is kept off thereafter, since the count value of the counter 21 coincides with the set value stored in the register 25, and accordingly, the power supply activating signal Si2 becomes high level, the main relay 13 is turned on to cause the ECU1 to start up again. The ECU1 starts up again also if the IGSW 11 is turned on before the wait time Tw elapses.

On the other hand, if the IGSW 11 is turned on during execution of the first judgment process or second judgment process, and this turn-on is detected by a not shown switch state judgment process, the first judgment process or second judgment process is stopped, and the start-up process starts from step S130 shown in Fig. 2.

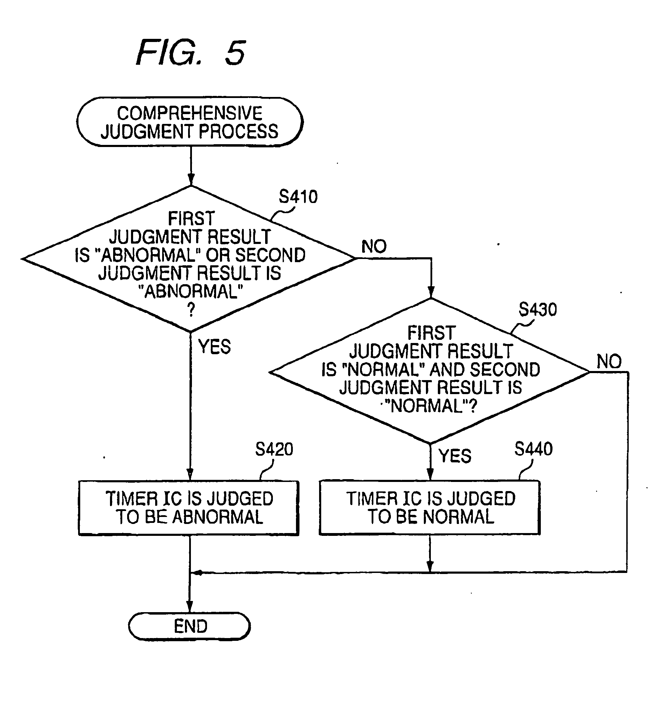

Fig. 5 is a flowchart showing a comprehensive judgment process to make a normal/abnormal judgment on the timer IC 5. In this embodiment, this comprehensive judgment process is performed during a time period between the time when the second judgment process is completed and the time when the wait judgment process judges that there comes a state in which the microcomputer 3 may go into wait state. However, this comprehensive judgment process may be performed at regular time intervals while the microcomputer 3 operates.

As shown in Fig. 5, when the comprehensive judgment process is started, the microcomputer 3 determines whether or not at least one of the first judgment result and the second judgment result shows "abnormal" at step S410. If the determination result at step S410 is affirmative, the process proceeds to step S420 to make a judgment that the timer IC 5 is abnormal. And then, the comprehensive judgment process is terminated.

If the determination result at step S410 is negative, that is, if neither of the first judgment result and the second judgment result is "abnormal", the process proceeds to step S430. At step S430, it is determined whether or not both the first judgment result and the second judgment result are "normal ". If this determination result is affirmative, the process proceeds to step S440 to make a judgment that the timer IC 5 is normal. And then, the comprehensive judgment process is terminated.

On the other hand, if the determination result at step S430 is negative, that is, if both the first judgment result and the second judgment result are not "normal", or "abnormal", the comprehensive judgment process is terminated without making a normal/abnormal judgment on the IC 5.

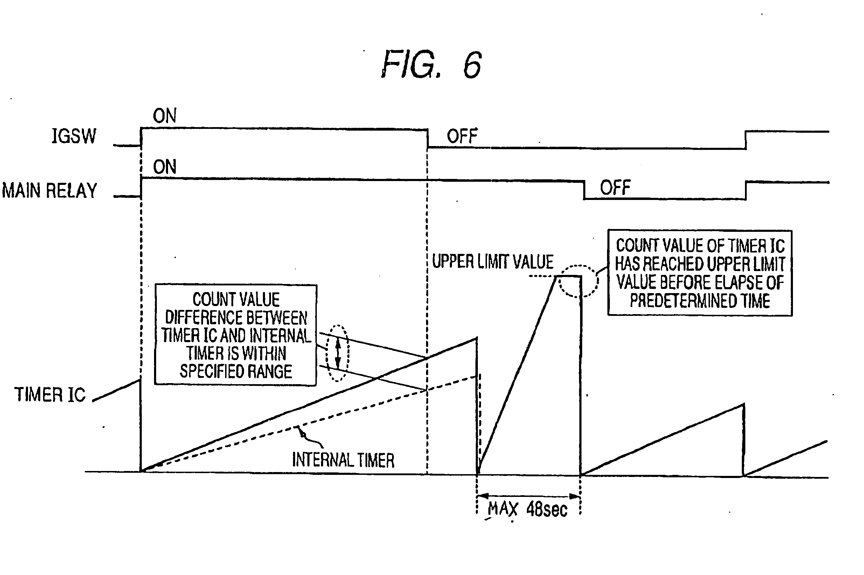

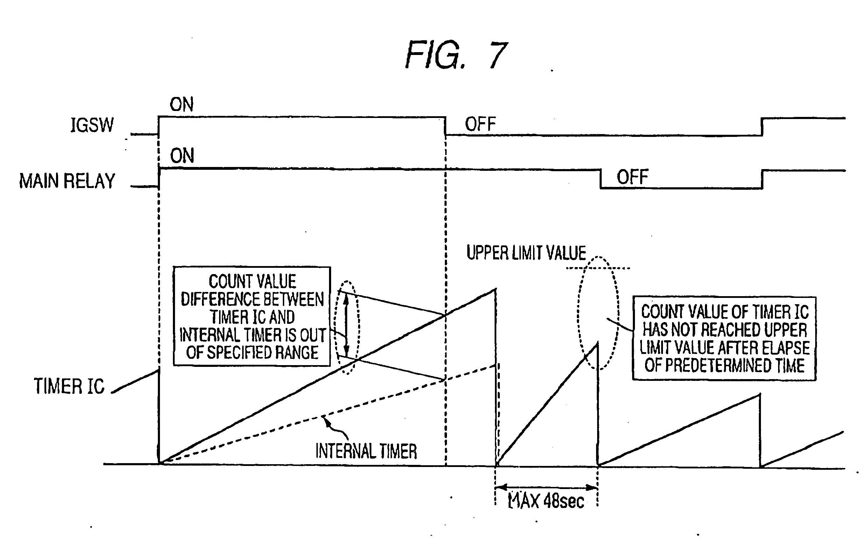

Next, examples of the above described processes are explained with reference to the time charts shown in Fig. 6, and Fig. 7. Fig. 6 shows an example where the timer IC 5 is normal, and Fig. 7 shows an example where the timer IC 5 is abnormal.

In the example shown in Fig. 6, when the IGSW 11 is turned on, and the IGSW signal Si1 becomes high level, the main relay 13 turns on, as a consequence of which the battery voltage VP is supplied to the ECU1, the main power supply voltage Vm is generated by the main power supply circuit 7m, and the microcomputer 3 starts up.

When the microcomputer 3 starts up, the power supply holding signal Sh supplied from the microcomputer 3 to the main relay drive circuit 15 becomes high level (S110) to ensure the on state of the main relay 13.

In this case, the frequency of the clock for the counting operation of the timer IC 5 (the clock generated by the clock generating circuit 23) is set to the normal frequency because the microcomputer 3 has started up due to turn-on of the IGSW 11, and the timer IC 5 makes a reset-start (S130), and also the internal timer makes a reset-start (S140). Thereafter, the microcomputer 3 continues to perform the engine control process as long as the IGSW 11 is on.

Afterwards, when the IGSW 11 is turned off, the microcomputer 3 performs the first judgment process shown in (B) of Fig. 3. And if it is determined that the judgment-performing conditions hold at step S220 of the first judgment process, the microcomputer 3 reads the current count value of the timer IC 5 and current count value of the internal timer, and determines whether or not a difference between these count values is within the specified range (S230).

If the timer IC 5 is normal, it results that the difference between the count value of the timer IC 5 and the count value of the internal counter is judged to be within the specified range (S230: YES), and the first judgment result is set to "normal" (S250).

Incidentally, the count value of the timer IC 5 read at step S230 of the first judgment process is a variation of the count value of the timer IC 5 for the period from the time when the microcomputer 3 starts up due to turn-on of the IGSW 11 to the time when the IGSW 11 is turned off. Likewise, the count value of the internal timer read at step S230 of the first judgment process is a variation of the count value of the internal timer for the period from the time when the microcomputer 3 starts up due to turn-on of the IGSW 11 to the time when the IGSW 11 is turned off. Accordingly, it can be said that step S230 determines whether or not a difference between these variations is within a specified range.

After completion of the first judgment process, the microcomputer 3 performs the second judgment process shown in Fig. 4. And, in this case, the frequency of the clock for the counting operation of the timer IC 5 is set to N times the normal frequency, and the time IC 5 is caused to make a reset-start.

After that, when the microcomputer 3 detects that the predetermined time period Ta (48 seconds in this example) has elapsed (S320: YES), and it is determined that the judgment-performing conditions hold at step S330, the count value of the timer IC 5 is read, and it is determined whether or not the count value has reached the upper limit value (S340).

Here, if the timer IC 5 is normal, it results that the count value of the timer IC 5 is determined to have reached the upper limit value (S340: YES), and the second judgment result is set to "normal" (S360).

Thereafter, the microcomputer 3 sets a set value corresponding to the wait time Tw to be elapsed before the next star-up of the microcomputer 3 in the register 25 of the timer IC 5, sets the frequency of the clock for the counting operation of the timer IC 5 to the normal frequency, causes the timer IC 5 to make a reset-start (S370), and issues the main-relay-off request to the wait judgment process (S380).

As a result, the main relay 13 is turned off, and the ECU 1 stops operation when it is determined that the microcomputer 3 may go into wait state. Incidentally, if the wait time Tw elapses while the IGSW 11 is kept off, the power supply activating signal Si2 becomes high level, and the main relay 13 is turned off, as a consequence of which the ECU 1 starts up again, and the microcomputer 3 performs the processes at S150 as described in the foregoing. However, Fig. 6 and Fig. 7 show cases where the IGSW 11 is turned off before the wait time Tw elapses.

As shown in Fig. 6, in case both the first judgment result and the second judgment result are set to "normal", it results that the timer IC 5 is judged to be normal by the comprehensive judgment process shown in Fig. 5 (S430: YES → S440)

On the other hand, if there occurs a case where the count value of the timer IC 5 does not show the correct time, it results that the difference between the count value of the timer IC 5 and the count value of the internal timer is determined to be out of the specified range by the first judgment process (S230: NO) which is performed when the IGS 11 is turned off, and the first judgment result is set to "abnormal" (S240), as shown in Fig. 7. Fig. 7 shows a case where the count value of the timer IC 5 abnormally becomes high.

If there occurs such an abnormality in which the timer IC 5 does not perform a full-count operation (that is, the count value does not change over the full range from the reset value to the upper limit value), it results that it is determined that the count value of the timer IC 5 does not reach the upper limit value even after elapse of the predetermined time period Ta (S340: NO), and the second judgment result is set to "abnormal" (S350), as shown in Fig. 7.

In case at least one of the first judgment result and the second judgment result is set to "abnormal", the timer IC 5 is judged to be abnormal (S410: YES → S420) by the comprehensive judgment process shown in Fig. 5.

With the ECU 1 having the above described structure, when the count value of the timer IC 5 does not change normally, the timer IC 5 is judged to be abnormal by the first judgment process.

In particular, with the ECU1 configured to perform the first judgment process when the IGSW 11 is turned off, it becomes to remove the problem in the conventional apparatuses that the execution frequency of the abnormality detecting operation is lowered. That is because the first judgment process is performed without fail each time the IGSW 11 is turned on.

In addition, the ECU1 is so configured that determination at step S230 of the first judgment process is not made if the battery voltage falls below a specified voltage, or the engine rotation speed rises above a specified value (S220: NO) within a period between turn-on and turn off of the IGSW11. This improves the accuracy of the normal/abnormal judgment on the timer IC 5 by removing the effect of extension of the intervals at which a regular routine of the internal timer (routine for advancing the count value of the internal counter) is executed, which is caused by lowering of the battery voltage, or rise of the engine rotation speed.

For example, if the battery voltage is lowered substantially, since the oscillation frequency of the clock generating circuit 23 is lowered, causing the frequency of the clock to be lowered below the normal frequency, it may become difficult for the count value of the timer IC 5 to be advanced. In addition, if the oscillation frequency of the clock generating circuit 23 is lowered, it may become difficult for the count value of the internal counter to be advanced as well. Hence, if the battery voltage is lowered substantially, the reliability of the judgment result of the first judgment process may be lost.

On the other hand, in the case of the microcomputer 3 executing an engine control routine, if the engine rotation speed rises substantially, since the execution frequency of the engine control routine becomes high, causing the intervals at which the regular routine for the internal timer is executed to extend, it may become difficult for the count value of the internal counter to be advanced. Hence, if the engine rotation speed rises substantially, the reliability of the judgment result of the first judgment process may be lost as well.

Accordingly, in this embodiment, if it is determined that the judgment-performing conditions do not hold at step S220 of the first judgment process, step S230 is skipped to prevent an unreliable judgment result from being obtained, to thereby improve reliability of the normal/abnormal judgment on the timer IC 5.

Furthermore, according to the ECU 1 of this embodiment, it is possible to confirm whether or not the timer IC 5 is normally performing full-count operation in a short time, because the microcomputer 3 performs the second judgment process after completion of the first judgment process. This makes it possible to verify whether or not the entire bit portions of the counter 21 of the timer IC 5 are operating normally, to thereby improve the normal/abnormal judgment on the timer IC 5.

Furthermore, the ECU1 of this embodiment is so configured that if the battery voltage falls below a specified value (S330: NO) within a period from the time at which the timer IC 5 is caused to make a reset-start at step S310 of the second judgment process to the time at which it is determined that the predetermined time period Ta has elapsed at step S320, step S340 of the second judgment process is not performed. Accordingly, also in regard to the determination at step S340 of the second judgment process, it is possible to improve the accuracy of the normal/abnormal judgment on the timer IC 5 by removing the effect of the battery voltage lowering.

As described in the foregoing, if the battery voltage is lowered substantially, it may become difficult for the count value of the timer circuit to be advanced. Accordingly, if the battery voltage is lowered substantially, there may occur a case where the count value of the timer IC 5 does not reach the upper limit value after elapse of the predetermined time period Ta, and accordingly, an erroneous judgment that the timer IC 5 is abnormal may be made although the timer IC 5 is normal actually.

Also, as described in the foregoing, if the battery voltage is lowered substantially, it may become difficult for the count value of the internal counter to be advanced. Accordingly, if the battery voltage is lowered substantially, there may occur a case where a period detected as the time period Ta based on the internal timer is longer than the actual time period Ta. This may cause an erroneous judgment that the count value of the timer IC 5 has reached the upper limit value before elapse of the time period Ta, and accordingly the timer IC is normal, even though there is an abnormality that the counting speed of the timer IC 5 is abnormally slow.

Accordingly, in this embodiment, if it is determined that the judgment-performing conditions do not hold at step S330 of the second judgment process, step S340 is skipped to prevent an unreliable judgment result from being obtained, to thereby improve reliability of the normal/abnormal judgment on the timer IC 5.

Furthermore, in this embodiment, when the judgment result of the first judgment process is "normal" (S230: YES → S250), and the judgment result of the second judgment process is "normal" (S340: YES->S360), the timer IC 5 is judged to be normal (S430: YES → S440). This improves the reliability of the normal/abnormal judgment on the timer IC 5.

It is a matter of course that various modifications can be made to the above described embodiment.

For example, step S130 and step S140 in Fig2. may be so modified to read the count value of the timer IC 5 and the count value of the internal timer instead of causing these timers to make a reset-start, and step S230 in Fig. 3 may be so modified to calculate a difference of the current count value of the timer IC 5 subtracted by the count value read at step S130, and the current count value of the internal timer subtracted by the count value read at step S140, and determine whether or not the calculated difference is within a specified range.

The embodiment may be modified such that only one of the first judgment process shown in (B) of Fig. 3 and the second judgment process shown in Fig. 4 is performed. In this case, the comprehensive judgment process is not performed, and if the first judgment result or the second judgment result is set to "abnormal", it is judged that the timer IC 5 is abnormal, while if the first judgment result or the second judgment result is set to "normal", it is judged that the timer IC 5 is normal.

In case the first judgment process is not performed and only the second judgment process is performed, the embodiment may be so configured to perform the second judgment process while the IGSW 11 is on (for example, immediately after the IGSW 11 is turned on).

In this case, step S330 may be so modified to determine whether or not there hold such conditions as the judgment-performing conditions that the battery voltage does not fall below a specified voltage, and the engine rotation speed does not rise above a specified speed during a period between the time at which step S310 is completed and the time at which it is determined that the predetermined time period Ta has elapsed at step S320. This configuration prevents step S340 of the second judgment process from being performed, if the battery voltage falls below the specified voltage, or the engine rotation speed rises above the specified speed within the period from the time at which the timer IC is caused to make a reset-start at step S310 to the time at which it is determined that the predetermined time period Ta has elapsed.

With this configuration, in regard to the determination at step S340 of the second judgment process, it is possible to improve the accuracy of the normal/abnormal judgment on the timer IC 5 by removing not only the effect of the battery voltage lowering, but the effect of the extension of the intervals at which the regular routine for the internal timer is executed, which is caused by the engine rotation speed increase.

## Claims

1. An electronic control apparatus (1) comprising:
an engine control section (3) supplied with electric power through a power switch (11) to operate; and
a timer circuit (5) always supplied with electric power to operate irrespective of an on/off state of said power switch (11);
**characterized by**
a power supply holding section (15) operating to hold electric power supply to said engine control section (3) after turn on of said power switch (11) until reception of a power off command from said engine control section (3) even though said power switch (11) is turned off;
wherein
said engine control section (3) is configured to perform, upon detecting turn-off of said power switch (11), a first process in which there is detected a difference between a variation of a count value of said timer circuit (5) for a first time period from a first time at which said power switch (11) is turned on to start up said engine control section (3) to a second time at which said power switch (11) is turned off, and a variation of an internal timer of said engine control section (3) from said first time to said second time, a second process in which it is determined whether or not said difference detected by said first process is within a specified range, and a third process in which said timer circuit (5) is judged to be abnormal if said difference detected by said first process is determined to be out of said specified range by said second process.

2. The electronic control apparatus (1) according to claim 1, wherein said engine control section (3) and said timer circuit (5) are supplied with a battery voltage (VP) as electric power, and said engine control section (3) is configured to determine whether or not said battery voltage (VP) falls below a specified voltage within said first time period, and to skip performing said second process if said battery voltage (VP) is determined to have fallen below said specified voltage within said time period.

3. The electronic control apparatus (1) according to claim 1, wherein said engine control section (3) is constituted by a microcomputer having a function of controlling an engine of a vehicle on which said electronic control apparatus (1) is mounted, said engine control section (3) is configured to determine whether or not a rotation speed of said engine rises above a specified speed within said first time period, and to skip performing said second process if said rotation speed is determined to have risen above said specified speed within said time period.

4. The electronic control apparatus (1) according to claim 1, wherein said engine control section (3) is configured to perform a fourth process in which said timer circuit (5) is caused to make a reset-start after a frequency of a clock used in said timer circuit (5) is changed from a first frequency for counting operation to a second frequency higher than said first frequency within a time period between said second time and a time at which said power off command is received by said power supply holding section (15), and a fifth process in which it is determined whether or not a count value of said timer circuit (5) has reached an upper limit value of said timer circuit (5) upon detecting that a predetermined time has elapsed after said reset-start of said timer circuit (5) on the basis of a count value of an internal timer of said timer circuit (5), and a sixth process in which said timer circuit (5) is judged to be abnormal if said count value of said timer circuit (5) is determined not to have reached said upper limit value by said fifth process.

5. The electronic control apparatus (1) according to claim 4, wherein said engine control section (3) and said timer circuit (5) are supplied with a battery voltage (VP) as electric power, and said engine control section (3) is configured to determine whether or not said battery voltage (VP) falls below a specified voltage within a second time period from a time at which said timer circuit (5) makes said reset-start to a time at which it is detected a predetermined time has elapsed since said reset-start of said timer circuit (5), and to skip performing said fifth process if said battery voltage (VP) is determined to have fallen below said specified voltage within said second time period,

6. The electronic control apparatus (1) according to claim 4, wherein said engine control section (3) judges that said timer circuit (5) is normal if said difference between said variations is determined to be within said specified range by said first process, and said count value is determined to have reached said upper limit value by said fifth process.

## Patentansprüche

1. Elektronische Steuervorrichtung (1), die aufweist:
einen Verbrennungsmotorsteuerabschnitt (3), dem elektrische Energie über einen Energieschalter (11) für einen Betrieb zugeführt wird; und
eine Zeitnehmerschaltung (5), der stets elektrische Energie für einen Betrieb unabhängig von einem Ein/Aus-Zustand des Energieschalters (11) zugeführt wird;
**gekennzeichnet durch**
einen Energiezufuhrhalteabschnitt (15), der betrieben wird, um eine elektrische Energiezufuhr zu dem Verbrennungsmotorsteuerabschnitt (3) nach einem Einschalten des Energieschalters (11) bis zu einem Empfang eines Energie-Aus-Befehls von dem Verbrennungsmotorsteuerabschnitt (3), auch wenn der Energieschalter (11) ausgeschaltet ist, zu halten;
wobei
der Verbrennungsmotorsteuerabschnitt (3) ausgelegt ist, beim Erfassen eines Ausschaltens des Energieschalters (11) einen ersten Prozess, bei dem eine Differenz zwischen einer Änderung eines Zählwertes der Zeitnehmerschaltung (5) für eine erste Zeitdauer von einem ersten Zeitpunkt, zu dem der Energieschalter (11) eingeschaltet wird, bis zum einem Starten des Verbrennungsmotorsteuerabschnitts (3), bis zu einem zweiten Zeitpunkt, zu dem der Energieschalter (11) ausgeschaltet wird, und einer Änderung eines internen Zeitnehmers des Verbrennungsmotorsteuerabschnitts (3) von dem ersten Zeitpunkt zu dem zweiten Zeitpunkt erfasst wird, einen zweiten Prozess, bei dem bestimmt wird, ob die Differenz, die **durch** den ersten Prozess erfasst wird, innerhalb eines spezifizierten Bereiches liegt, und einen dritten Prozess durchzuführen, bei dem die Zeitnehmerschaltung (5) als abnorm beurteilt wird, wenn die Differenz, die **durch** den ersten Prozess erfasst wird, von dem zweiten Prozess als außerhalb des spezifizierten Bereiches liegend bestimmt wird.

2. Elektronische Steuervorrichtung (1) nach Anspruch 1, wobei dem Verbrennungsmotorsteuerabschnitt (3) und der Zeitnehmerschaltung (5) eine Batteriespannung (VP) als elektrische Energie zugeführt wird, und wobei der Verbrennungsmotorsteuerabschnitt (3) ausgelegt ist, zu bestimmen, ob die Batteriespannung (VP) innerhalb der ersten Zeitdauer auf unterhalb einer spezifizierten Spannung abfällt, und die Durchführung des zweiten Prozesses zu überspringen, wenn die Batteriespannung (VP) als innerhalb der Zeitdauer auf unterhalb der spezifizierten Spannung abfallend bestimmt wird.

3. Elektronische Steuervorrichtung (1) nach Anspruch 1, wobei der Verbrennungsmotorsteuerabschnitt (3) durch einen Mikrocomputer ausgebildet wird, der eine Funktion zum Steuern eines Verbrennungsmotors eines Fahrzeugs, an dem die elektronische Steuervorrichtung (1) montiert ist, ausgebildet ist, wobei der Verbrennungsmotorsteuerabschnitt (3) ausgelegt ist, zu bestimmen, ob eine Drehzahl des Verbrennungsmotors innerhalb der ersten Zeitdauer auf oberhalb einer spezifizierten Drehzahl ansteigt, und die Durchführung des zweiten Prozesses zu überspringen, wenn die Drehzahl als innerhalb der Zeitdauer auf oberhalb der spezifizierten Drehzahl ansteigend bestimmt wird.

4. Elektronische Steuervorrichtung (1) nach Anspruch 1, wobei der Verbrennungsmotorsteuerabschnitt (3) ausgelegt ist, einen vierten Prozess, bei dem die Zeitnehmerschaltung (5) veranlasst wird, einen Rücksetzstart durchzuführen, nachdem sich eine Frequenz eines Taktes, der in der Zeitnehmerschaltung (5) verwendet wird, von einer ersten Frequenz für einen Zählbetrieb in eine zweite Frequenz, die größer als die erste Frequenz ist, innerhalb einer Zeitdauer zwischen dem zweiten Zeitpunkt und einem Zeitpunkt, zu dem der Energie-Aus-Befehl von dem Energiezufuhrhalteabschnitt (15) empfangen wird, geändert hat, und einen fünften Prozess, bei dem auf der Grundlage eines Zählwertes eines internen Zeitnehmers der Zeitnehmerschaltung (5) bestimmt wird, ob ein Zählwert der Zeitnehmerschaltung (4) einen oberen Grenzwert der Zeitnehmerschaltung (5) beim Erfassen, dass eine vorbestimmte Zeit seit dem Rücksetzstart in der Zeitnehmerschaltung (5) verstrichen ist, erreicht hat, und einen sechsten Prozess durchzuführen, bei dem die Zeitnehmerschaltung (5) als abnorm beurteilt wird, wenn der Zählwert der Zeitnehmerschaltung (5) durch den fünften Prozess als den oberen Grenzwert nicht erreichend bestimmt wird.

5. Elektronische Steuervorrichtung (1) nach Anspruch 4, wobei dem Verbrennungsmotorsteuerabschnitt (3) und der Zeitnehmerschaltung (5) eine Batteriespannung (VP) als elektrische Energie zugeführt wird, und wobei der Verbrennungsmotorsteuerabschnitt (3) ausgelegt ist, zu bestimmen, ob die Batteriespannung (VP) auf unterhalb einer spezifizierten Spannung innerhalb einer zweiten Zeitdauer von einem Zeitpunkt, zu dem die Zeitnehmerschaltung (5) das Rücksetzstarten durchführt, bis zu einem Zeitpunkt, zu dem erfasst wird, dass eine vorbestimmte Zeit seit dem Rücksetzstarten der Zeitnehmerschaltung (5) verstrichen ist, abfällt, und die Durchführung des fünften Prozesses zu überspringen, wenn die Batteriespannung (VP) als innerhalb der zweiten Zeitdauer auf unterhalb der spezifizierten Spannung abfallend bestimmt wird.

6. Elektronische Steuervorrichtung (1) nach Anspruch 4, wobei der Verbrennungsmotorsteuerabschnitt (3) urteilt, dass die Zeitnehmerschaltung (5) normal ist, wenn die Differenz zwischen den Änderungen durch den ersten Prozess als innerhalb des spezifizierten Bereiches liegend bestimmt wird und der Zählwert durch den fünften Prozess als den oberen Grenzwert erreichend bestimmt wird.

## Revendications

1. Dispositif de commande électronique (1) comprenant :
une section de commande de moteur (3) à laquelle il est fourni une alimentation électrique à travers un commutateur électrique (11) pour fonctionner ; et
un circuit de minuterie (5) auquel il est toujours fourni une alimentation électrique pour fonctionner indépendamment d'un état d'activation/désactivation dudit commutateur électrique (11) ;
**caractérisé par**
une section de maintien d'alimentation électrique (15) fonctionnant pour maintenir l'alimentation électrique à ladite section de commande de moteur (3) après l'activation dudit commutateur électrique (11) jusqu'à la réception d'une commande de mise hors tension en provenance de ladite section de commande de moteur (3) même si ledit commutateur électrique (11) est désactivé ;
dans lequel
ladite section de commande de moteur (3) est configurée pour effectuer, au moment de la détection de la désactivation dudit commutateur électrique (11), un premier procédé dans lequel il est détecté une différence entre une variation d'une valeur de comptage dudit circuit de minuterie (5) pendant une première période de temps à partir d'un premier temps auquel ledit commutateur électrique (11) est activé pour démarrer ladite section de commande de moteur (3) jusqu'à un deuxième temps auquel ledit commutateur électrique (11) est désactivé, et une variation d'une minuterie interne de ladite section de commande de moteur (3) à partir dudit premier temps jusqu'au dit deuxième temps, un deuxième procédé dans lequel il est déterminé si ladite différence détectée par ledit premier procédé se trouve ou pas dans une plage spécifiée, et un troisième procédé dans lequel il est jugé que ledit circuit de minuterie (5) est anormal s'il est déterminé que ladite différence détectée par ledit premier procédé se trouve à l'extérieur de ladite plage spécifiée par ledit deuxième procédé.

2. Dispositif de commande électronique (1) selon la revendication 1, dans lequel il est fourni à ladite section de commande de moteur (3) et au dit circuit de minuterie (5) une tension de batterie (VP) en tant qu'alimentation électrique, et ladite section de commande de moteur (3) est configurée pour déterminer si ladite tension de batterie (VP) tombe ou pas au-dessous d'une tension spécifiée au cours de ladite première période de temps, et pour sauter l'exécution dudit deuxième procédé s'il est déterminé que ladite tension de batterie (VP) est tombée au-dessous de ladite tension spécifiée au cours de ladite période de temps.

3. Dispositif de commande électronique (1) selon la revendication 1, dans lequel ladite section de commande de moteur (3) est constituée d'un micro-ordinateur ayant une fonction de commande d'un moteur d'un véhicule sur lequel ledit dispositif de commande électronique (1) est monté, ladite section de commande de moteur (3) est configurée pour déterminer si un régime de rotation dudit moteur monte ou pas au-dessus d'un régime spécifié au cours de ladite première période de temps, et pour sauter l'exécution dudit deuxième procédé s'il est déterminé que ledit régime de rotation est monté au-dessus dudit régime spécifier au cours de ladite période de temps.

4. Dispositif de commande électronique (1) selon la revendication 1, dans lequel ladite section de commande de moteur (3) est configurée pour effectuer un quatrième procédé dans lequel ledit circuit de minuterie (5) est amené à réaliser une réinitialisation-démarrage après qu'une fréquence d'une horloge utilisée dans ledit circuit de minuterie (5) est changée d'une première fréquence pour une opération de comptage à une deuxième fréquence supérieure à ladite première fréquence au cours d'une période de temps entre ledit deuxième temps et un temps auquel ladite commande de mise hors tension est reçue par ladite section de maintien d'alimentation électrique (15), et un cinquième procédé dans lequel il est déterminé si une valeur de comptage dudit circuit de minuterie (5) a atteint ou pas une valeur de limite supérieure dudit circuit de minuterie (5) au moment de la détection de l'expiration d'un temps prédéterminé après ladite réinitialisation-démarrage dudit circuit de minuterie (5) sur la base d'une valeur de comptage d'une minuterie interne dudit circuit de minuterie (5), et un sixième procédé dans lequel il est jugé que ledit circuit de minuterie (5) est anormal s'il est déterminé que ladite valeur de comptage dudit circuit de minuterie (5) n'a pas atteint ladite valeur de limite supérieure par ledit cinquième procédé.

5. Dispositif de commande électronique (1) selon la revendication 4, dans lequel il est fourni à ladite section de commande de moteur (3) et au dit circuit de minuterie (5) une tension de batterie (VP) en tant qu'alimentation électrique, et ladite section de commande de moteur (3) est configurée pour déterminer si ladite tension de batterie (VP) tombe ou pas au-dessous d'une tension spécifiée au cours d'une deuxième période de temps à partir d'un temps auquel ledit circuit de minuterie (5) réalise ladite réinitialisation-démarrage jusqu'à un temps auquel il est détecté une expiration d'un temps prédéterminé depuis ladite réinitialisation-démarrage dudit circuit de minuterie (5), et pour sauter l'exécution dudit cinquième procédé s'il est déterminé que ladite tension de batterie (VP) est tombée au-dessous de ladite tension spécifiée au cours de ladite deuxième période de temps.

6. Dispositif de commande électronique (1) selon la revendication 4, dans lequel ladite section de commande de moteur (3) juge que ledit circuit de minuterie (5) est normal s'il est déterminé que ladite différence entre lesdites variations se trouve à l'intérieur de ladite plage spécifiée par ledit premier procédé, et s'il est déterminé que ladite valeur de comptage a atteint ladite valeur de limite supérieure par ledit cinquième procédé.
